# DEMANDE DE BREVET EUROPEEN

(11) **EP 3 418 202 A1**
(43) Date de publication de la demande: **26.12.2018**
(21) Numéro de dépôt: 18175299.9
(22) Date de dépôt: 31.05.2018
(51) Int. Cl.: B64D 41/00, H02J 4/00, H02H 3/08, H02J 3/14, H02J 9/00, H02J 13/00, H02J 3/00, H03K 17/00

(54) **BOITIER DE DISTRIBUTION ÉLECTRIQUE INTÉGRANT LES FONCTIONS DE DISJONCTION, DE DÉLESTAGE ET DE CONVERSION POUR AÉRONEF**

(30) Priorité: 22.06.2017 FR 1770664
(71) Demandeur: Airbus Helicopters, 13725 Marignane Cedex (FR)
(72) Inventeur: ABDELLI, Kamel, 13011 MARSEILLE (FR); BALLAY, Eddy, 13220 CHATEAUNEUF-LES-MARTIGUES (FR); SELLIER, Olivier, 13510 EGUILLES (FR)
(74) Mandataire: GPI & Associés

(57) **Abrégé**

La présente invention concerne un boîtier de distribution électrique (10) pour aéronef intégrant des fonctions de disjonction, de délestage et éventuellement de conversion électrique ainsi qu'une architecture électrique (1) comportant de tels boîtiers de distribution électrique (10). Ledit boîtier de distribution électrique (10) comporte un connecteur d'entrée (11), plusieurs connecteurs de sortie (12,13,14), au moins un dispositif de coupure (15,16,17), éventuellement un dispositif de conversion électrique (19) et un calculateur (18). Ledit connecteur d'entrée (11) relié à un dispositif d'alimentation électrique (2) et chaque connecteur de sortie (12,13,14) alimentant respectivement un équipement électrique (3,4,5) permettent une circulation d'un courant électrique de puissance et d'un signal d'information, ledit signal d'information étant superposé audit courant électrique de puissance. Ledit calculateur pilote chaque dispositif de coupure (15,16,17) selon des informations contenues dans ledit signal d'information afin d'alimenter ou bien de délester électriquement chaque connecteur de sortie (12,13,14) et, par suite, chaque équipement électrique (3,4,5).

## Description

La présente invention se situe dans le domaine technique des systèmes de distribution de courants électriques et plus particulièrement dans le domaine technique des architectures électriques d'aéronef.

La présente invention concerne un boîtier de distribution électrique intégrant les fonctions de délestage, de disjonction et éventuellement de conversion, une architecture électrique d'aéronef comportant de tels boîtiers de distribution électrique et un aéronef muni d'une telle architecture électrique.

Un aéronef comporte usuellement une architecture électrique destinée à alimenter les équipements électriques de l'aéronef. Cette architecture électrique comporte généralement plusieurs réseaux électriques, désignés aussi réseaux de bord, délivrant un courant électrique qui peut être continu ou bien alternatif (monophasé ou triphasé) et de différentes tensions électriques. La nature de ces réseaux de bord et de leurs courants électriques prend en compte les équipements électriques à alimenter ainsi que les sources électriques utilisées. Les équipements électriques peuvent être par exemple des instruments de mesure nécessaires au vol, des moyens d'information tels que des écrans, des moyens de communication internes et externes ainsi que des appareils de fortes puissances tels que des pompes hydrauliques ou un treuil.

Selon la norme EN-2282 utilisée dans le domaine aéronautique, un réseau électrique à basse tension électrique fournit par exemple un courant électrique alternatif triphasé d'une tension électrique de 115 Volts et un réseau électrique à très basse tension électrique fournit un courant électrique continu d'une tension électrique de 28 Volts. Par ailleurs, selon la norme internationale MIL-STD-704, utilisée également dans le domaine aéronautique, un réseau électrique à haute tension électrique fournit un courant électrique continu monophasé d'une tension électrique de 270 Volts pour une alimentation électrique adaptée à des équipements électriques de fortes puissances électriques.

Différentes sources électriques peuvent être utilisées pour alimenter chaque réseau électrique.

Une architecture électrique d'un aéronef comporte généralement comme source(s) électrique(s) principale(s) une ou plusieurs génératrices de courant électrique entrainées par l'installation motrice de l'aéronef et alimentant un réseau électrique à haute tension électrique ou bien un réseau électrique à basse tension électrique. Une source électrique peut aussi être une batterie embarquée reliée directement à un réseau électrique de l'aéronef afin d'alimenter ce réseau électrique avant le démarrage de l'installation motrice de l'aéronef ou bien en cas de panne de chaque source électrique principale. Une source électrique peut également être un groupe électrique de parc relié électriquement à un réseau électrique à haute tension électrique ou bien à basse tension électrique de l'aéronef lorsque l'aéronef est au sol.

Une architecture électrique d'un aéronef peut aussi comporter un ou plusieurs dispositifs de conversion électrique agencés respectivement entre deux réseaux électriques de tensions électriques différentes ou bien entre une source électrique et un réseau électrique. Ce dispositif de conversion électrique permet de transformer par exemple un courant électrique à haute tension électrique ou bien à basse tension électrique en un courant électrique à très basse tension électrique.

De plus, un réseau électrique peut comporter plusieurs barres d'alimentation électrique reliées respectivement à différents équipements électriques en fonction de leur niveau de délestage En particulier, les équipements électriques essentiels au vol d'un aéronef sont reliés à une barre d'alimentation électrique principale afin d'assurer en permanence l'alimentation électrique de ces équipements électriques quelles que soient les conditions de fonctionnement de l'architecture électrique. Les autres équipements électriques sont reliés respectivement à une barre d'alimentation électrique secondaire et leur alimentation électrique peut être arrêtée lorsqu'un délestage électrique est nécessaire, selon les différents cas d'urgences lors d'un vol.

En effet, en présence d'un dysfonctionnement au sein de l'architecture électrique ne permettant pas la fourniture d'une puissance électrique suffisante pour l'alimentation électrique de l'ensemble des équipements électriques de l'aéronef, l'alimentation des équipements électriques non indispensables au vol de l'aéronef, et donc délestable, peut être coupée. Dès lors, chaque barre d'alimentation secondaire peut être délestée en fonction de son niveau de délestage, c'est-à-dire de la criticité des équipements électriques auxquels la barre de d'alimentation secondaire est reliée, et de la puissance électrique disponible afin qu'au minimum les équipements électriques essentiels au vol et ne devant donc jamais être délestés soient alimentés électriquement avec une puissance électrique suffisante.

Le délestage d'une barre d'alimentation secondaire est par exemple réalisé par l'intermédiaire d'un contacteur agencé en amont de cette barre d'alimentation secondaire. Les contacteurs de délestage de l'aéronef sont généralement regroupés en différents emplacements de l'aéronef au sein de boîtiers de délestage. Le niveau de délestage d'un équipement électrique est défini selon la criticité de l'équipement électrique pour assurer un vol d'aéronef en toute sécurité. L'action de délestage peut être assurée par un dispositif dédié ou sur action direct du pilote.

Par ailleurs, un disjoncteur est également agencé en amont de chaque équipement électrique, à savoir entre une barre d'alimentation électrique et cet équipement électrique, afin de le protéger électriquement. Les disjoncteurs sont usuellement centralisés sur des panneaux dédiés, dont certains sont agencés dans un cockpit de l'aéronef afin d'être accessibles si nécessaire en vol par l'équipage de l'aéronef en cas d'urgence.

Les différentes sources électriques, les dispositifs de conversion électrique, les barres d'alimentation électrique principales et secondaires ainsi que les boîtiers de délestage et les panneaux dédiés aux disjoncteurs forment un système de génération et de distribution électrique de l'aéronef désigné par l'acronyme « EGDS » pour la désignation en langue anglaise « Electrical Generation and Distribution System ».

Ce système de génération et de distribution électrique *EDGS* permet donc d'alimenter électriquement chaque équipement électrique et assure notamment les fonctions de régulation des sources électriques, de protection et de reconfiguration des réseaux électriques selon les conditions de fonctionnement de ce système de génération et de distribution électrique *EDGS.*

Dès lors, de nombreux fils électriques ou conducteurs électriques pour l'alimentation électrique des équipements électriques de l'aéronef doivent cheminer dans l'aéronef, depuis les sources électriques vers les boîtiers de délestage, depuis chaque boîtier de délestage vers les barres d'alimentation secondaire respectives ainsi que depuis chaque panneau dédié aux disjoncteurs vers les équipements électriques respectifs.

De plus, ces équipements électriques peuvent échanger des informations entre eux ou avec des dispositifs de centralisation d'informations tels qu'un système avionique ou des boitiers de gestion des moteurs par exemple. Ces dispositifs de centralisation d'informations font cheminer des informations par exemple à l'intention de ces équipements électriques et des boîtiers de délestage, notamment une information concernant le niveau de délestage requis selon le cas de figure rencontré. Ces dispositifs de centralisation d'informations reçoivent également des informations émises par ces équipements électriques.

Là encore, de nombreux fils électriques pour la circulation de ces informations doivent cheminer dans l'aéronef, d'une part entre des équipements électriques et d'autre part entre des équipements électriques et des dispositifs de centralisation d'informations.

Par ailleurs, les sources électriques et les dispositifs de conversion électrique d'une architecture électrique alimentant des équipements électriques essentiels au vol d'un aéronef sont généralement doublés pour des raisons de sécurité afin d'éviter, en cas de panne d'une source électrique ou bien d'un dispositif de conversion électrique, une perte d'alimentation électrique de ces équipements électriques essentiels. Cette redondance a également pour effet d'augmenter le nombre de fils électriques cheminant dans l'aéronef et, par suite, la masse des harnais électriques correspondants.

En conséquence, les fils électriques des harnais électriques cheminant dans l'aéronef sont très nombreux et sont destinés pour une partie à l'alimentation électrique des équipements électriques de l'aéronef et pour une autre partie à la circulation d'informations.

Dès lors, ces harnais électriques peuvent être encombrants et leur mise en place complexe en raison de leurs dimensions importantes et de leurs raideurs consécutives au nombre important de fils électriques composant ces harnais. De même, la maintenance de ces harnais est également complexe, afin par exemple d'identifier et de remplacer des fils électriques défectueux reliés à un équipement électrique particulier.

De plus, la masse formée par ces harnais électriques est également importante et son optimisation, à savoir sa diminution, a un effet direct sur les performances de l'aéronef.

En outre, suite à la multiplication des équipements électriques présents à bord des aéronefs modernes, le besoin en puissance électrique a grandement augmentée ces dernières années. De fait, ces aéronefs peuvent comporter deux architectures électriques munies chacune d'une source électrique dédiée et indépendantes l'une de l'autre en fonctionnement normal. Par exemple, une architecture électrique gauche et une architecture électrique droite sont installées à bord de l'aéronef. Un équipement électrique peut être relié aux deux architectures électriques par sécurité. Les deux architectures électriques sont aussi reliées électriquement entre elles par sécurité en cas de dysfonctionnement d'une de leurs sources électriques. De plus, une source électrique complémentaire peut être reliée aux deux architectures électriques pour pallier une panne des sources électriques principales.

Par ailleurs, les sections des fils électriques utilisés dans un réseau à basse tension électrique et, par suite, leurs masses sont supérieures aux sections des fils électriques utilisés dans un réseau à haute tension électrique pour le transfert de puissances électriques similaires. L'optimisation de la masse des harnais incite alors à privilégier les réseaux à haute tension électrique, en implantant par exemple les dispositifs de conversion électrique au plus près des équipements électriques ou bien en utilisant des équipements électriques à haute tension électrique. Toutefois, cette optimisation ne réduit pas le nombre de fils électriques des harnais et le gain sur leurs masses ne représente pas le cas le plus optimisé.

La présente invention vise alors à s'affranchir des limitations mentionnées ci-dessus, en optimisant l'architecture électrique d'un aéronef, aussi bien en termes de nombre de fils électriques que de masse. Notamment, la présente invention vise à décentraliser les fonctions de disjonction, de délestage et éventuellement de conversion et de les déplacer au sein de boîtiers de distribution électrique agencés au plus près des équipements électriques.

La présente invention a alors pour objet un boîtier de distribution électrique pour aéronef intégrant les fonctions de disjonction, de délestage et éventuellement de conversion ainsi qu'une architecture électrique utilisant ce boîtier de distribution électrique.

Selon l'invention, un boîtier de distribution électrique pour aéronef intégrant les fonctions de disjonction et de délestage comporte :
- au moins un connecteur d'entrée destiné à être relié électriquement à un dispositif d'alimentation électrique fournissant un courant électrique d'entrée ayant une tension électrique d'entrée V1, et
- au moins un connecteur de sortie destiné à être relié électriquement à un équipement électrique et à alimenter cet équipement électrique avec un courant électrique de sortie ayant une tension électrique de sortie V2.

Ce boîtier de distribution électrique est remarquable en ce qu'il comporte :
- au moins un dispositif de coupure relié électriquement à au moins un connecteur de sortie, chaque connecteur de sortie étant relié électriquement à un seul dispositif de coupure, chaque dispositif de coupure comportant, pour chaque connecteur de sortie relié électriquement à ce dispositif de coupure, un état alimenté électriquement et un état non alimenté électriquement afin de piloter de façon sélective une alimentation électrique et une coupure de l'alimentation électrique de chaque connecteur de sortie,
- un calculateur relié électriquement à chaque connecteur d'entrée et à chaque dispositif de coupure, et
- une liaison électrique d'entrée reliant électriquement le calculateur à chaque connecteur d'entrée, un courant électrique de puissance et un signal d'information circulant simultanément dans chaque liaison électrique d'entrée, le signal d'information étant superposé au courant électrique de puissance et le signal d'information comportant une information d'un niveau de délestage de sorte que le calculateur pilote chaque dispositif de coupure afin d'activer selon l'information du niveau de délestage l'état alimenté électriquement ou bien l'état non alimenté électriquement pour chaque connecteur de sortie relié électriquement à ce dispositif de coupure pour alimenter ou bien délester électriquement chaque connecteur de sortie relié électriquement à ce dispositif de coupure.

Ce boîtier de distribution électrique est destiné à être installé sur une architecture électrique d'un aéronef. Une telle architecture électrique comporte généralement un dispositif d'alimentation électrique, au moins un équipement électrique devant être alimenté électriquement et un ou plusieurs dispositifs de centralisation d'informations, tels qu'un système avionique et des boitiers de gestion des moteurs de l'aéronef par exemple.

Un dispositif d'alimentation électrique comporte au moins une source de courant électrique telle une génératrice de courant électrique entrainée par l'installation motrice de l'aéronef ou bien une batterie embarquée. Une source de courant électrique peut également être un groupe électrique de parc relié électriquement à l'aéronef lorsque l'aéronef est au sol.

Les équipements électriques peuvent être, entre autres, des instruments de mesure nécessaires au vol, des moyens d'information tels des écrans, des moyens de communication internes et externes ainsi que des appareils de fortes puissances tels que des pompes hydrauliques ou un treuil par exemple.

Chaque équipement électrique nécessite pour fonctionner un courant électrique de puissance fourni par le dispositif d'alimentation électrique et échange également des informations, sous la forme d'un signal d'information, vers l'extérieur de cet équipement électrique, par exemple vers d'autres équipements électriques ou bien vers un ou plusieurs dispositifs de centralisation d'informations ainsi que vers le boîtier de distribution électrique auquel il est relié électriquement.

Un tel dispositif de centralisation d'informations peut être relié électriquement à un connecteur de sortie du boîtier de distribution électrique au même titre qu'un équipement électrique ou bien à un connecteur d'entrée du boîtier de distribution électrique et agencé alors entre un dispositif d'alimentation électrique et ce boîtier de distribution électrique.

L'échange de ces informations peut s'effectuer de façon bilatérale, à savoir qu'un équipement électrique peut recevoir des informations et transmettre des informations. Dans ce but, le signal d'information peut traverser le boîtier de distribution électrique selon l'invention et peut de fait entrer et sortir du boîtier de distribution électrique au niveau de chaque connecteur d'entrée et de chaque connecteur de sortie.

Par exemple, le signal d'information circule entre deux équipements électriques reliés au même boîtier de distribution électrique et traverse donc ce boîtier de distribution électrique par l'intermédiaire de deux connecteurs de sortie. Selon un autre exemple, le signal d'information circule entre deux équipements électriques reliés à deux boîtiers de distribution électrique distincts et traverse donc chaque boîtier de distribution électrique par l'intermédiaire d'un connecteur d'entrée et d'un connecteur de sortie de chaque boîtier de distribution électrique.

De même, le signal d'information peut circuler entre un équipement électrique et un dispositif de centralisation d'informations reliés respectivement à un connecteur de sortie et un connecteur d'entrée d'un même boîtier de distribution électrique et traverse donc le boîtier de distribution électrique.

Ce signal d'information traverse le boîtier de distribution électrique simultanément au courant électrique de puissance fourni par un dispositif d'alimentation électrique et destiné à alimenter chaque équipement électrique relié électriquement à ce boîtier de distribution électrique.

Notamment, le courant électrique de puissance et le signal d'information circulent simultanément et de façon superposée dans un même conducteur électrique de la liaison électrique d'entrée reliant électriquement le calculateur à chaque connecteur d'entrée. Cette superposition du signal d'information et du courant électrique de puissance permet avantageusement de réduire significativement le nombre de conducteurs électriques formant la liaison électrique d'entrée ainsi que le nombre de conducteurs électriques agencés en amont de chaque connecteur d'entrée du boîtier de distribution électrique nécessaires pour transmettre simultanément ce signal d'information et ce courant électrique de puissance.

Deux conducteurs électriques sont en effet suffisants au niveau de la liaison électrique d'entrée ainsi qu'au niveau du harnais agencé en amont de chaque boîtier de distribution électrique et reliant chaque connecteur d'entrée au dispositif de centralisation d'informations, à savoir un conducteur électrique principal pour la circulation du courant électrique de puissance et du signal d'information proprement dite et un conducteur électrique de masse permettant la fermeture du circuit électrique. De la sorte, cette liaison électrique d'entrée ainsi que le harnais agencé en amont de chaque boîtier de distribution électrique comporte un nombre de fils électriques minimisé, ce qui permet d'optimiser leurs masses.

Cette superposition du signal d'information et du courant électrique de puissance est par exemple réalisée selon le principe des courants porteurs en ligne, connu sous l'acronyme « *CPL* » ou bien sous l'acronyme « PLC » pour la désignation en langue anglaise « Power Line Communication », et utilisé notamment dans les réseaux informatiques.

Par ailleurs, le calculateur du boîtier de distribution électrique selon l'invention permet d'extraire des informations contenues dans le signal d'information et peut éventuellement ajouter des informations au signal d'information lorsqu'il traverse le boîtier de distribution électrique.

Le signal d'information comporte en particulier une information du niveau de délestage requis par les conditions de fonctionnement de l'architecture électrique de l'aéronef. Selon cette information du niveau de délestage, le calculateur pilote chaque dispositif de coupure de sorte à activer l'état alimenté électriquement ou l'état non alimenté électriquement pour chaque connecteur de sortie relié électriquement à ce dispositif de coupure afin d'alimenter ou non électriquement de façon sélective chaque connecteur de sortie et, par suite, l'équipement électrique relié électriquement à chaque connecteur de sortie.

De la sorte, le boîtier de distribution électrique selon l'invention effectue par l'intermédiaire de chaque dispositif de coupure un délestage sélectif parmi les équipements électriques auxquels il est relié en fonction de cette information du niveau de délestage contenue dans le signal d'information et du niveau de délestage de chaque équipement électrique. Le boîtier de distribution électrique remplace avantageusement un boîtier de délestage ainsi que les barres d'alimentation secondaire dédiées à chaque niveau de délestage utilisé généralement sur un aéronef.

En conséquence, le boîtier de distribution électrique selon l'invention, agencé à proximité de chaque équipement électrique alors que chaque boîtier de délestage et chaque barre d'alimentation secondaire sont positionnés dans des zones dédiées de l'aéronef, permet de nouveau une optimisation des harnais de l'aéronef en limitant les longueurs des fils électriques qui le composent. Par suite, la masse des harnais est optimisée.

Le niveau de délestage d'un équipement électrique peut par exemple être contenu dans le signal d'information provenant de cet équipement électrique ou bien défini directement au niveau du boîtier de distribution électrique et attaché au connecteur de sortie auquel il est lié ou encore défini par un dispositif de contrôle dédié, tel un dispositif connu sous la désignation en langue anglaise « Pin Programming» par exemple.

De plus, le boîtier de distribution électrique peut comporter au moins un capteur mesurant le courant électrique de puissance circulant par chaque connecteur de sortie relié électriquement à ce dispositif de coupure. Par exemple, chaque capteur mesure l'intensité de ce courant électrique de puissance. Chaque dispositif de coupure active alors l'état non alimenté électriquement d'un connecteur de sortie pour lequel l'intensité du courant électrique de puissance est supérieure à un seuil prédéfini.

De la sorte, chaque dispositif de coupure coupe automatiquement l'alimentation électrique d'un connecteur de sortie du boîtier de distribution électrique et, par suite, l'alimentation électrique de l'équipement électrique auquel ce connecteur de sortie est relié. Le boîtier de distribution électrique a alors une fonction de disjoncteur afin de protéger l'équipement électrique ainsi que l'architecture électrique d'une augmentation de l'intensité du courant électrique due par exemple à un dysfonctionnement ou à un court-circuit. Chaque capteur peut être agencé directement dans un dispositif de coupure.

De la sorte, le boîtier de distribution électrique peut remplacer avantageusement un panneau dédié aux disjoncteurs et utilisé généralement sur un aéronef. Comme précédemment, le boîtier de distribution électrique selon l'invention, agencé à proximité de chaque équipement électrique alors que chaque panneau dédié aux disjoncteurs est positionné dans des zones dédiées de l'aéronef, permet de nouveau une optimisation des harnais de l'aéronef en limitant les longueurs des fils électriques qui le composent et, par suite, leurs masses.

Le boîtier de distribution électrique peut comporter un seul dispositif de coupure relié électriquement à chaque connecteur de sortie et activant ainsi de façon sélective l'état alimenté ou l'état non alimenté électriquement pour chaque connecteur de sortie.

Le boîtier de distribution électrique peut également comporter autant de dispositif(s) de coupure que de connecteur(s) de sortie, chaque dispositif de coupure étant relié électriquement à un seul connecteur de sortie et activant uniquement l'état alimenté ou l'état non alimenté électriquement de ce connecteur de sortie.

Un tel dispositif de coupure constitue avantageusement un équipement de délestage et de protection. Chaque dispositif de coupure peut également être piloté à distance, par l'intermédiaire du signal d'information pour par exemple permettre à l'équipage de l'aéronef de couper volontairement l'alimentation électrique d'un ou plusieurs équipements électriques. Cette coupure d'alimentation électrique est traditionnellement obtenue en agissant manuellement sur le disjoncteur affecté à un équipement électrique. Avantageusement, le boîtier de distribution électrique selon l'invention permet d'effectuer cette coupure d'alimentation électrique plus facilement par l'intermédiaire d'un dispositif de commande formé par exemple par un clavier associé à un écran ou bien à un écran tactile présent dans le cockpit de l'aéronef.

Un dispositif de coupure peut par exemple être formé par un équipement électronique existant et désigné par l'acronyme *SSPC* pour la désignation en langue anglaise « Solid State Power Controller ». Un équipement *SSPC* a des fonctions de protection, de commutation à distance et de transmission d'informations. Un équipement *SSPC* peut embarquer des fonctions supplémentaires telles que l'actionnement selon une logique de commande ou bien une mesure de courant électrique par exemple. Des équipements *SSPC* ont été développés pour des courants électriques alternatifs et continus, de différentes puissances électriques.

Le boîtier de distribution électrique selon l'invention peut également comporter au moins un dispositif de conversion électrique relié électriquement à au moins un connecteur d'entrée et à au moins un connecteur de sortie, le dispositif de conversion électrique transformant le courant électrique d'entrée ayant la tension électrique d'entrée V1 en un courant électrique de sortie ayant une tension électrique de sortie V2 différente de la tension électrique d'entrée V1, la tension électrique de sortie V2 étant généralement inférieure à la tension électrique d'entrée V1. Chaque connecteur de sortie est relié électriquement au dispositif de conversion électrique par l'intermédiaire d'un dispositif de coupure et alimente un équipement électrique avec ce courant électrique de sortie ayant cette tension électrique de sortie V2.

Lorsque le boîtier de distribution électrique comporte au moins deux connecteurs de sortie, le boîtier de distribution électrique peut comporter un seul dispositif de conversion électrique relié électriquement à au moins deux connecteurs de sortie qui sont alors alimentés électriquement avec un courant électrique de sortie ayant la même tension électrique de sortie V2 différente de la tension électrique d'entrée V1.

Le boîtier de distribution électrique peut aussi comporter plusieurs dispositifs de conversion électrique de sorte que des connecteurs de sortie du boîtier de distribution électrique reliés respectivement à différents dispositifs de conversion électrique fournissent des courants électriques de sortie avec plusieurs valeurs de tensions électriques de sortie V2 différentes entre elles et différentes de la tension électrique d'entrée V1. Par exemple, deux dispositifs de conversion électrique peuvent être reliés électriquement à au moins deux connecteurs de sortie.

Un connecteur de sortie du boîtier de distribution électrique non relié électriquement à un dispositif de conversion électrique fournit quant à lui un courant électrique de sortie ayant la tension électrique de sortie V2 égale à la tension électrique d'entrée V1.

Par ailleurs, le boîtier de distribution électrique comporte au moins une liaison électrique de sortie, chaque liaison électrique de sortie reliant électriquement un dispositif de coupure à un connecteur de sortie relié électriquement à ce dispositif de coupure. Comme pour le connecteur d'entrée, un courant électrique de puissance et un signal d'information peuvent circuler simultanément dans la liaison électrique de sortie, le courant électrique de puissance alimentant l'équipement électrique relié à ce connecteur de sortie, le signal d'information permettant un échange bilatéral entre cet équipement électrique et le boîtier de distribution électrique et, par suite, entre cet équipement électrique et d'autres équipements électriques ou bien un dispositif de centralisation d'informations relié électriquement à ce boîtier de distribution électrique.

Dans un mode de réalisation préférée de l'invention, le signal d'information est superposé au courant électrique de puissance dans un même conducteur électrique de la liaison électrique de sortie. Deux conducteurs électriques sont là encore suffisants pour la liaison électrique de sortie, à savoir un conducteur électrique principal pour la circulation du courant électrique de puissance et du signal d'information proprement dite et un conducteur électrique de masse permettant l'égalisation des niveaux de tensions, la masse permettant la circulation du courant électrique restant dans l'aéronef lui-même. De même, deux conducteurs sont suffisants pour le harnais agencé en aval de chaque connecteur de sortie et reliant électriquement le boîtier de distribution électrique à un équipement électrique.

Ce mode de réalisation préféré permet avantageusement une optimisation du nombre de conducteurs électriques, tels des fils électriques, cheminant dans l'aéronef, aussi bien pour former les liaisons d'entrée et de sortie de chaque boîtier de distribution électrique selon l'invention que pour former les harnais situés en amont et en aval de chaque boîtier de distribution électrique. Par suite, la masse des harnais est également optimisée. De plus, le nombre de conducteurs électriques du harnais étant optimisé, les harnais sont plus souples et plus maniables, facilitant leurs manipulations et leurs mises en place dans l'aéronef ainsi que les opérations de maintenance.

De plus, le signal d'information comporte, dans ce mode de réalisation préféré, le niveau de délestage à appliquer au niveau de chaque équipement électrique de l'architecture électrique de sorte que le dispositif de contrôle dédié à un boîtier de distribution électrique définit le niveau de criticité de chaque équipement électrique connecté à ce boîtier de distribution électrique et donc le délestage particulier de chacun de ces équipements électriques en fonction du niveau de délestage contenu dans le signal d'information.

Toutefois, dans un autre mode de réalisation de l'invention, au moins une liaison électrique de sortie est formée de plusieurs conducteurs électriques. Le signal d'information et le courant électrique de puissance peuvent alors circuler de façon distincte et séparée dans ces conducteurs électriques distincts afin que le boîtier de distribution électrique soit adapté aux équipements électriques utilisés aujourd'hui et non compatible avec la superposition du signal d'information et du courant électrique de puissance. Ce mode de réalisation permet tout de même une réduction significative de la masse des harnais de l'aéronef agencés en aval de chaque boîtier de distribution électrique.

En effet, le boîtier de distribution électrique selon l'invention étant agencé à proximité des équipements électriques auxquels il est relié, la longueur des conducteurs électriques entre ces équipements électriques et le boîtier de distribution électrique est réduite. En conséquence, une partie importante des harnais, agencée en aval de chaque boîtier de distribution électrique, prend donc en compte la superposition du signal d'information et du courant électrique de puissance. Par suite, le nombre de conducteurs électriques et la masse de ces harnais sont également réduits. La réduction de la masse des harnais de l'aéronef peuvent être de l'ordre de 30% par exemple. La concentration des équipements électriques autour de ces dispositifs de distribution électrique intelligents permet avantageusement une réduction du nombre des liaisons entre les équipements électriques éparpillés dans l'aéronef et ainsi l'intégration par zones des équipements électriques.

En outre, ces deux modes de réalisation peuvent se combiner au sein d'un boîtier de distribution électrique selon l'invention. De la sorte, un signal d'information est superposé à un courant électrique de puissance dans un même conducteur électrique d'au moins une première liaison électrique de sortie vers un premier connecteur de sortie alors qu'un signal d'information et un courant électrique de puissance circule de façon distincte et séparée dans des conducteurs électriques distincts d'au moins une seconde liaison électrique de sortie vers un second connecteur de sortie.

Cette répartition par zones peut également être industrialisée afin d'optimiser l'intégration des équipements électriques dans l'aéronef, en terme de temps de mise en place et de coût, ainsi que leurs encombrements.

La présente invention a aussi pour objet une architecture électrique pour aéronef utilisant un ou plusieurs boîtiers de distribution électrique tels que précédemment décrits.

Une telle architecture électrique pour aéronef comporte alors :
- un dispositif d'alimentation électrique, comportant au moins une source électrique, fournissant un courant électrique d'entrée ayant une tension électrique d'entrée V1,
- au moins un équipement électrique alimenté avec un courant électrique de sortie ayant une tension électrique de sortie V2,
- au moins un dispositif de centralisation d'informations transmettant notamment une information d'un niveau de délestage, et
- au moins un boîtier de distribution électrique tel que précédemment décrit, chaque boîtier de distribution électrique étant relié électriquement à un dispositif d'alimentation électrique, à au moins un équipement électrique et à au moins un dispositif de centralisation d'informations.

Chaque dispositif de centralisation d'informations peut être relié électriquement à un connecteur de sortie du boîtier de distribution électrique au même titre qu'un équipement électrique ou bien à un connecteur d'entrée du boîtier de distribution électrique et agencé alors entre un dispositif d'alimentation électrique et ce boîtier de distribution électrique.

La présente invention a également pour objet un aéronef comportant au moins une telle architecture électrique.

L'invention et ses avantages apparaîtront avec plus de détails dans le cadre de la description qui suit avec des exemples donnés à titre illustratif en référence aux figures annexées qui représentent :
- la figure 1, un aéronef muni d'une architecture électrique, et
- la figure 2, une vue schématique de l'architecture électrique.

Les éléments présents dans plusieurs figures distinctes sont affectés d'une seule et même référence.

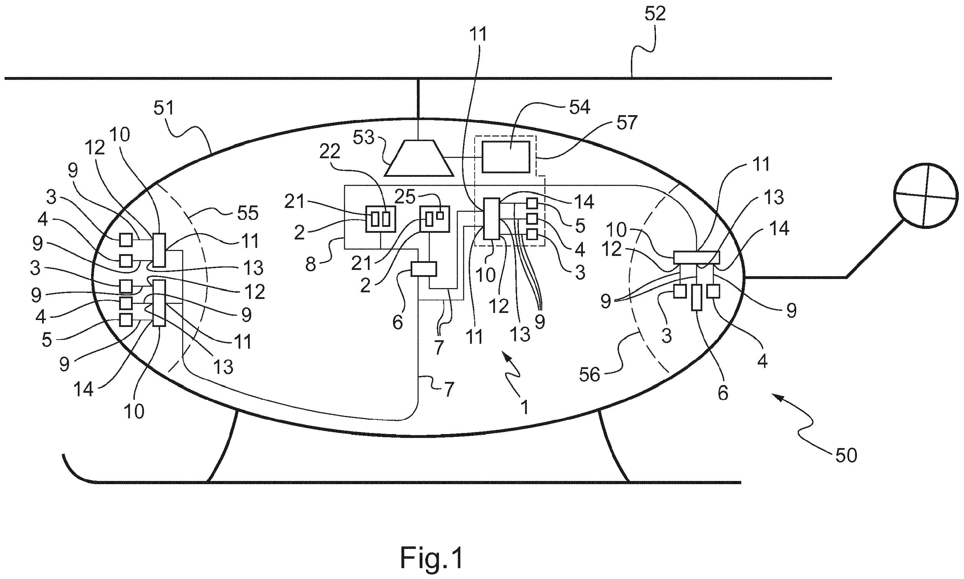

Sur la figure 1, un aéronef 50 est représenté, cet aéronef 50 comprenant un rotor principal 52 entraîné en rotation par une installation motrice 54 par l'intermédiaire d'une boîte de transmission de puissance mécanique 53 ainsi qu'une architecture électrique 1. L'architecture électrique 1 chemine dans l'aéronef 50 afin d'alimenter électriquement les équipements électriques 3,4,5 de l'aéronef 50, dans le cockpit 55 et une zone arrière 56 de l'aéronef 50 ainsi que dans une zone moteur 57 située à proximité de l'installation motrice 54.

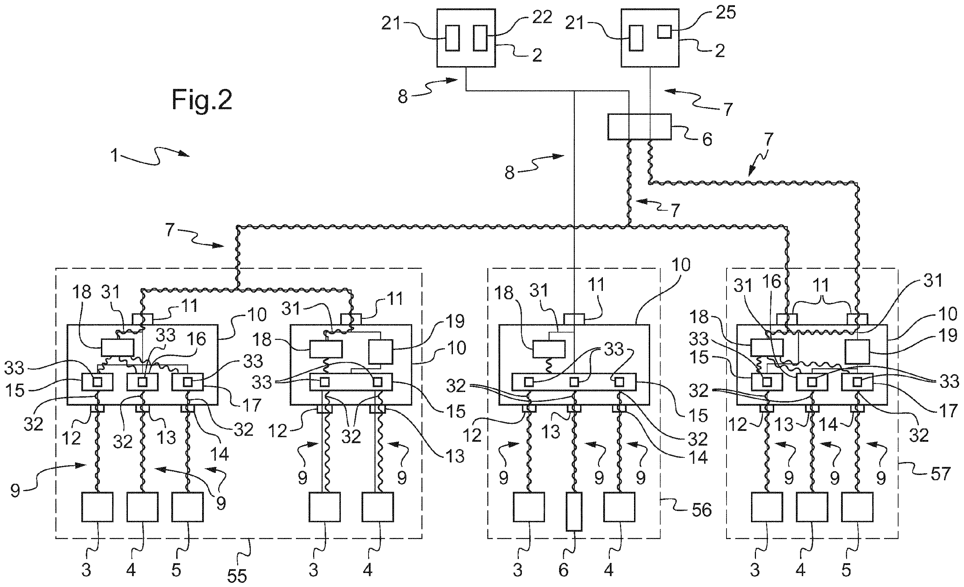

L'architecture électrique 1, représenté sur la figure 2, comporte deux dispositifs d'alimentation électrique 2 fournissant un courant électrique d'entrée ayant une tension électrique d'entrée V1. Chaque dispositif d'alimentation électrique 2 comporte une ou deux sources électriques principales 21,22, généralement une génératrice de courant électrique entrainée directement par l'installation motrice 54 ou bien par l'intermédiaire de la boîte de transmission de puissance mécanique 53. Un des deux dispositifs d'alimentation électrique 2 comporte également une batterie 25 comme source électrique. Un premier dispositif d'alimentation électrique 2 alimente électriquement toutes les zones 55,56,57 de l'aéronef 50 par l'intermédiaire de fils électriques formant des harnais électrique primaires 7,8 alors que le second dispositif d'alimentation électrique 2 alimente électriquement uniquement la zone moteur 57 par l'intermédiaire des harnais primaires 7.

Dans chaque zone 55,56,57, l'architecture électrique 1 comporte un ou plusieurs boîtiers de distribution électrique 10 permettant de répartir et de réguler l'alimentation électrique vers différents équipements électriques 3,4,5. De plus, l'architecture électrique 1 comporte deux dispositifs de centralisation d'informations 6.

Un dispositif de centralisation d'informations 6 est positionné entre d'une part un dispositif d'alimentation électrique 2 et d'autre part le cockpit 55 et la zone moteur 57. Ce dispositif de centralisation d'informations 6 échange des informations avec les boîtiers de distribution électrique 10 situés dans le cockpit 55 et dans la zone moteur 57 ainsi qu'avec les équipements électriques 3,4,5 reliés électriquement à ces boîtiers de distribution électrique 10. Ces informations sont transmises par l'intermédiaire d'un signal d'information superposé à un courant électrique de puissance dans les harnais primaires 7 alimentant chaque boîtier de distribution électrique 10, cette superposition étant par exemple réalisée selon le principe des courants porteurs en ligne.

Le courant électrique de puissance est représenté sur la figure 2 par des lignes droites alors que le signal d'information est représenté par des lignes sensiblement sinusoïdales.

La superposition du signal d'information et du courant électrique de puissance dans les harnais primaires 7 permet d'optimiser le nombre de fils électriques de ces harnais primaires 7 reliant le dispositif de centralisation d'informations 6 et les boîtiers de distribution électrique 10, la puissance électrique et les informations circulant dans le même fil électrique.

Chaque boîtier de distribution électrique 10 comporte au moins un connecteur d'entrée 11 et au moins deux connecteurs de sortie 12,13,14. Chaque connecteur d'entrée 11 est relié électriquement par un harnais primaire 7,8 à un dispositif d'alimentation électrique 2 lui fournissant un courant électrique d'entrée ayant une tension électrique d'entrée V1. Chaque connecteur de sortie 12,13,14 est relié par un harnais électrique secondaire 9 à un équipement électrique 3,4,5 et permet d'alimenter chaque équipement électrique 3,4,5 avec un courant électrique de sortie ayant une tension électrique de sortie V2.

Chaque boîtier de distribution électrique 10 comporte également un calculateur 18 relié électriquement à chaque connecteur d'entrée 11 par une liaison électrique d'entrée 31 et au moins un dispositif de coupure 15,16,17 relié d'une part à un ou plusieurs connecteurs de sortie 12,13,14 par une liaison électrique de sortie 32 et d'autre part à chaque dispositif de coupure 15,16,17.

Les boîtiers de distribution électrique 10 du cockpit 55 et de la zone arrière 56 comportent un seul connecteur d'entrée 11 et sont donc alimentés par un seul dispositif d'alimentation électrique 2. Le boîtier de distribution électrique 10 de la zone moteur 57 comporte deux connecteurs d'entrée 11 et est donc alimenté par les deux dispositifs d'alimentation électrique 2. De la sorte, le boîtier de distribution électrique 10 de la zone moteur 57 peut toujours être alimenté indépendamment des boîtiers de distribution électrique 10 du cockpit 55 et de la zone arrière 56, donc sans limiter la puissance électrique disponible pour chacun de ces boîtiers de distribution électrique 10 lorsque les deux dispositifs d'alimentation électrique 2 fonctionnent normalement. De plus, le boîtier de distribution électrique 10 de la zone moteur 57 peut toujours être alimenté même en cas de panne d'un des deux dispositifs d'alimentation électrique 2.

Dans le cockpit 55, un premier boîtier de distribution électrique 10 comporte trois connecteurs de sortie 12,13,14 reliés électriquement respectivement à trois équipements électriques 3,4,5 ainsi que trois dispositifs de coupure 15,16,17 reliés électriquement respectivement à un connecteur de sortie 12,13,14.

Le calculateur 18 du premier boîtier de distribution électrique 10 extrait une information du niveau de délestage contenue dans le signal d'information circulant dans la liaison d'entrée 31 et pilote alors selon cette information du niveau de délestage les trois dispositifs de coupure 15,16,17 afin d'activer un état alimenté électriquement ou un état non alimenté électriquement de façon sélective pour chaque connecteur de sortie 12,13,14.

De la sorte, le premier boîtier de distribution électrique 10 permet le délestage d'un ou plusieurs équipements électriques 3,4,5 selon les conditions de fonctionnement de l'architecture électrique 1 et cette information du niveau de délestage. Dans l'état alimenté électriquement, chaque connecteur de sortie 12,13,14 fournit le courant électrique de sortie ayant la tension électrique de sortie V2 égale à la tension électrique d'entrée V1 du courant électrique d'entrée.

De plus, le signal d'information transmis par le dispositif de centralisation d'informations 6 au premier boîtier de distribution électrique 10 circule jusqu'aux trois équipements électriques 3,4,5 reliés à ce premier boîtier de distribution électrique 10 respectivement par l'intermédiaire des liaisons électriques de sortie 32 et les connecteurs de sortie 12,13,14.

Avantageusement, le signal d'information est transmis aux équipements électriques 3,4,5 de façon superposée au courant électrique de puissance dans chaque harnais secondaire 9. De la sorte, le nombre de fils électriques de chaque harnais secondaire reliant chaque équipement électrique 3,4,5 au premier boîtier de distribution électrique 10 est également optimisé.

En conséquence, le nombre de fils électriques formant les harnais primaires 7 et secondaires 9 cheminant dans l'aéronef 50, du dispositif de centralisation d'informations 6 jusqu'à ces trois équipements électriques 3,4,5 est avantageusement optimisé. De plus, ces harnais électriques 7,9 sont plus souples facilitant ainsi leurs mises en place dans l'aéronef 50.

Dans le cockpit 55, un deuxième boîtier de distribution électrique 10 comporte deux connecteurs de sortie 12,13 reliés électriquement respectivement à deux équipements électriques 3,4 ainsi qu'un seul dispositif de coupure 15 relié électriquement aux deux connecteurs de sortie 12,13 par deux liaisons électriques de sortie 32. Ce deuxième boîtier de distribution électrique 10 comporte également un dispositif de conversion électrique 19 permettant de transformer la tension électrique d'entrée V1 du courant électrique d'entrée une tension électrique différente.

Ce dispositif de conversion électrique 19 est relié électriquement au connecteur d'entrée 11 du deuxième boîtier de distribution électrique 10 ainsi qu'aux deux connecteurs de sortie 12,13 par l'intermédiaire du dispositif de coupure 15 et les liaisons électriques de sortie 32. De la sorte, les deux connecteurs de sortie 12,13 alimentent les deux équipements électriques 3,4 avec un courant électrique de sortie ayant la tension électrique de sortie V2 fournie par le dispositif de conversion électrique 19 et différente de la tension électrique d'entrée V1.

Comme précédemment, le calculateur 18 extrait une information du niveau de délestage contenue dans le signal d'information circulant dans la liaison d'entrée 31 et pilote alors le dispositif de coupure 15 afin d'activer un état alimenté ou un état non alimenté électriquement pour chaque connecteur de sortie 12,13,14 selon cette information du niveau de délestage.

Un signal d'information et un courant électrique de puissance circulent également dans des fils électriques distincts dans chaque liaison de sortie 32 et dans les harnais secondaires 9 jusqu'aux deux équipements électriques 3,4. Dans ce cas, les connecteurs de sortie 12,13 du deuxième boîtier de distribution électrique 10 ainsi que les harnais secondaires 9 sont adaptés aux équipements électriques 3,4 utilisés et non compatibles avec la superposition du signal d'information et du courant électrique de puissance.

Dans la zone arrière 56, un troisième boîtier de distribution électrique 10 comporte trois connecteurs de sortie 12,13,14 ainsi qu'un seul dispositif de coupure 15 relié électriquement aux trois connecteurs de sortie 12,13,14 par trois liaisons électriques de sortie 32. Deux connecteurs de sortie 12,14 sont reliés électriquement respectivement à deux équipements électriques 3,4 alors qu'un troisième connecteur de sortie 13 est relié à un dispositif de centralisation d'informations 6. Chaque connecteur de sortie 12,13,14 fournit le courant électrique de sortie avec une tension électrique de sortie V2 égale à la tension électrique d'entrée V1.

Un signal d'information peut circuler, par l'intermédiaire du troisième boîtier de distribution électrique 10, entre les deux équipements électriques 3,4 ainsi qu'entre ces deux équipements électriques 3,4 et le dispositif de centralisation d'informations 6 relié à un des connecteurs de sortie 12,13,14. Avantageusement, ce signal d'information circule de façon superposée au courant électrique de puissance dans les liaisons électriques de sortie 32 et les harnais secondaires 9. Le nombre de fils électriques reliant le dispositif de centralisation d'informations 6 et les équipements électriques 3,4 au troisième boîtier de distribution électrique 10 est ainsi optimisé.

Enfin, dans la zone moteur 57, un quatrième boîtier de distribution électrique 10 comporte trois connecteurs de sortie 12,13,14 reliés électriquement respectivement à trois équipements électriques 3,4,5 ainsi que trois dispositifs de coupure 15,16,17 reliés électriquement respectivement à un connecteur de sortie 12,13,14 par une liaison électrique de sortie 32. Ce quatrième boîtier de distribution électrique 10 comporte également un dispositif de conversion électrique 19 permettant de transformer la tension électrique d'entrée V1 du courant électrique d'entrée en une tension électrique différente.

Ce dispositif de conversion électrique 19 est relié électriquement au connecteur d'entrée 11 ainsi qu'à deux connecteurs de sortie 13,14 par l'intermédiaire d'un dispositif de coupure 16,17 et deux liaisons électriques de sortie 32. De la sorte, un premier connecteur de sortie 12 alimente un équipement électrique 3 avec un courant électrique de sortie ayant la tension électrique de sortie V2 égale à la tension électrique d'entrée V1 alors que les deux autres connecteurs de sortie 13,14 alimentent respectivement un équipement électrique 4,5 avec un courant électrique de sortie ayant la tension électrique de sortie V2 différente de la tension électrique d'entrée V1.

Comme précédemment, le calculateur 18 extrait une information du niveau de délestage contenue dans le signal d'information circulant dans la liaison d'entrée 31 afin de piloter les trois dispositifs de coupure 15,16,17 pour activer un état alimenté ou un état non alimenté électriquement pour chaque connecteur de sortie 12,13,14 selon cette information du niveau de délestage.

Là encore, le signal d'information est transmis aux trois équipements électriques 3,4,5 de façon superposée au courant électrique de puissance dans les harnais secondaires 9 optimisant avantageusement le nombre de fils électriques de ces harnais secondaires 9 reliant les trois équipements électriques 3,4,5 et le boîtier de distribution électrique 10.

De plus, le dispositif de conversion électrique 19 permet de fournir un courant électrique de sortie ayant une tension électrique de sortie V2 adaptée aux équipements électriques 3,4,5 reliés électriquement aux connecteurs de sortie 12,13,14.

Par ailleurs, chaque boîtier de distribution électrique 10 de l'architecture électrique 1 comporte au moins un capteur 33 mesurant le courant électrique de puissance circulant par chaque connecteur de sortie 12,13,14. Chaque dispositif de coupure 15,16,17 active alors l'état non alimenté électriquement d'un connecteur de sortie 12,13,14, pour lequel l'intensité du courant électrique de puissance est supérieure à un seuil prédéfini. Chaque boîtier de distribution électrique 10 se comporte ainsi comme un disjoncteur protégeant électriquement l'architecture électrique 1 en général et les équipements électriques 3,4,5 en particulier. Chaque capteur 33 est plus précisément agencé dans un dispositif de coupure 15,16,17.

En conclusion, l'architecture électrique 1 représentée sur la figure 2 est, grâce à l'utilisation des boîtiers de distribution électrique 10 et à la superposition du signal d'information au courant électrique de puissance aussi bien dans les harnais primaires 7 que dans les harnais secondaires 9, optimisée en termes de nombre de fils électriques. En conséquence, les harnais primaires 7 et secondaires 9 ont des masses optimisées et leurs mises en place dans l'aéronef 50 sont facilitées. De plus, les boîtiers de délestage et les panneaux dédiés aux disjoncteurs utilisés traditionnellement sont supprimés dans cette architecture électrique 1 comprenant des boîtiers de distribution électrique 10.

En outre, l'utilisation d'un courant électrique d'entrée à haute tension électrique d'entrée V1 par exemple, un courant électrique continu monophasé de tension égale à 250 Volts, permet de minimiser les sections des fils électriques formant les harnais primaires 7 et d'optimiser ainsi leur masses.

Les équipements électriques 3,4,5 peuvent alors être alimentés avec un courant électrique de sortie avec une tension électrique de sortie V2 égale à cette haute tension électrique d'entrée V1 ou bien avec un courant électrique de sortie avec une basse ou très basse tension électrique de sortie V2 grâce à l'utilisation d'un dispositif de conversion 19. De la sorte, les boîtiers de distribution électrique 10 permettent avantageusement l'utilisation de différents équipements électriques 3,4,5 tout en optimisant les harnais primaires 7 et secondaires 9.

Enfin, cette architecture électrique 1 est, par l'intermédiaire des boîtiers de distribution électrique 10, compatible avec des équipements électriques 3,4,5 permettant aussi bien l'utilisation d'un signal d'information superposé à un courant électrique de puissance qu'un signal d'information circulant de façon distincte du courant électrique de puissance.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Architecture électrique (1) pour aéronef (50) comportant :
- un dispositif d'alimentation électrique (2) fournissant un courant électrique d'entrée ayant une tension électrique d'entrée (V1),
- au moins un équipement électrique (3,4,5) alimenté avec un courant électrique de sortie ayant une tension électrique de sortie (V2),
- au moins un dispositif de centralisation d'informations (6) transmettant une information d'un niveau de délestage, et
- au moins un boîtier de distribution électrique (10) intégrant des fonctions de disjonction et de délestage comportant :
∘ au moins un connecteur d'entrée (11) destiné à être relié électriquement à un dispositif d'alimentation électrique (2) fournissant un courant électrique d'entrée ayant une tension électrique d'entrée (V1),
∘ au moins un connecteur de sortie (12,13,14) destiné à être relié électriquement à un équipement électrique (3,4,5) et à alimenter ledit équipement électrique (3,4,5) avec un courant électrique de sortie ayant une tension électrique de sortie (V2),
∘ au moins un dispositif de coupure (15,16,17) relié électriquement à au moins un connecteur de sortie (12,13,14), chaque connecteur de sortie (12,13,14) étant relié électriquement à un seul dispositif de coupure (15,16,17), chaque dispositif de coupure (15,16,17) comportant pour chaque connecteur de sortie (12,13,14) relié électriquement audit dispositif de coupure (15,16,17) un état alimenté électriquement et un état non alimenté électriquement afin de piloter de façon sélective une alimentation électrique et une coupure de ladite alimentation électrique dudit connecteur de sortie (12,13,14),
∘ un calculateur (18) relié électriquement à chaque connecteur d'entrée (11) et à chaque dispositif de coupure (15,16,17), et
∘ une liaison électrique d'entrée (31) reliant électriquement ledit calculateur (18) à chaque connecteur d'entrée (11), un courant électrique de puissance et un signal d'information circulant simultanément dans chaque liaison électrique d'entrée (31), ledit signal d'information étant superposé audit courant électrique de puissance et ledit signal d'information comportant une information d'un niveau de délestage de sorte que ledit calculateur pilote chaque dispositif de coupure (15,16,17) afin d'activer selon ladite information dudit niveau de délestage ledit état alimenté électriquement ou bien ledit état non alimenté électriquement pour chaque connecteur de sortie (12,13,14) relié électriquement audit dispositif de coupure (15,16,17) pour alimenter ou bien délester ainsi électriquement chaque connecteur de sortie (12,13,14) relié électriquement audit dispositif de coupure (15,16,17),
**caractérisée en ce que** chaque boîtier de distribution électrique (10) est relié électriquement à un dispositif d'alimentation électrique (2), à au moins un équipement électrique (3,4,5) et à au moins un dispositif de centralisation d'informations (6).

2. Architecture électrique (1) selon la revendication 1, **caractérisé en ce que** ledit boîtier de distribution électrique (10) comporte au moins un dispositif de conversion électrique (19) relié électriquement à au moins un connecteur d'entrée (11) et à au moins un connecteur de sortie (12,13,14), ledit dispositif de conversion électrique (19) transformant ledit courant électrique d'entrée ayant ladite tension électrique d'entrée (V1) en ledit courant électrique de sortie ayant ladite tension électrique de sortie (V2) différente de ladite tension électrique d'entrée (V1).

3. Architecture électrique (1) selon la revendication 2,
**caractérisée en ce que** ledit boîtier de distribution électrique (10) comportant au moins deux connecteurs de sortie (12,13,14), ledit boîtier de distribution électrique (10) comporte au moins un dispositif de conversion électrique (19) relié électriquement à au moins deux connecteurs de sortie (12,13,14).

4. Architecture électrique (1) selon l'une quelconque des revendications 1 à 3,
**caractérisée en ce que** ledit boîtier de distribution électrique (10) comporte un seul dispositif de coupure (15,16,17) relié électriquement à chaque connecteur de sortie (12,13,14).

5. Architecture électrique (1) selon l'une quelconque des revendications 1 à 3,
**caractérisée en ce que** ledit boîtier de distribution électrique (10) comporte autant de dispositif(s) de coupure (15,16,17) que de connecteur(s) de sortie(s) (12,13,14), chaque dispositif de coupure (15,16,17) étant relié électriquement à un seul connecteur de sortie (12,13,14).

6. Architecture électrique (1) selon l'une quelconque des revendications 1 à 5,
**caractérisée en ce que** ledit boîtier de distribution électrique (10) comporte au moins une liaison électrique de sortie (32) reliant électriquement un dispositif de coupure (15,16,17) à un connecteur de sortie (12,13,14), un courant électrique de puissance et un signal d'information circulant simultanément dans ladite liaison électrique de sortie (32), au moins une liaison électrique de sortie (32) étant formée de plusieurs conducteurs électriques de sorte que ledit signal d'information et ledit courant électrique de puissance circulent de façon distincte et séparée dans lesdits conducteurs électriques distincts.

7. Architecture électrique (1) selon l'une quelconque des revendications 1 à 5,
**caractérisée en ce que** ledit boîtier de distribution électrique (10) comporte au moins une liaison électrique de sortie (32) reliant électriquement un dispositif de coupure (15,16,17) à un connecteur de sortie (12,13,14), un courant électrique de puissance et un signal d'information circulant simultanément dans ladite liaison électrique de sortie (32), ledit signal d'information étant superposé audit courant électrique de puissance dans ladite liaison électrique de sortie (32).

8. Architecture électrique (1) selon l'une quelconque des revendications 1 à 7,
**caractérisée en ce que** chaque boîtier de distribution électrique (10) comporte au moins un capteur (33) mesurant ledit courant électrique de puissance circulant par chaque connecteur de sortie (12,13,14) et active ledit état non alimenté électriquement d'un connecteur de sortie (12,13,14) pour lequel l'intensité dudit courant électrique de puissance est supérieure à un seuil prédéfini.

9. Architecture électrique (1) selon la revendication 8, **caractérisée en ce que** ledit au moins un capteur (33) est agencé dans un dispositif de coupure (15,16,17).

10. Architecture électrique (1) selon l'une quelconque des revendications 1 à 9,
**caractérisée en ce qu'**un dispositif de centralisation d'informations (6) est agencé entre un dispositif d'alimentation électrique (2) et un boîtier de distribution électrique (10).

11. Architecture électrique (1) selon l'une quelconque des revendications 1 à 10,
**caractérisée en ce que** ledit signal d'information comporte ladite information dudit niveau de délestage à appliquer au niveau de chaque équipement électrique (3,4,5) de ladite architecture électrique (1) de sorte que ledit dispositif de contrôle dédié à un boîtier de distribution électrique (10) définit le niveau de criticité de chaque équipement électrique (3,4,5) connecté audit boîtier de distribution électrique (10) et donc le délestage particulier de chacun de ces équipements électriques (3,4,5) en fonction ladite information dudit niveau de délestage contenu dans ledit signal d'information.

12. Aéronef (50),
**caractérisé en ce que** ledit aéronef (50) comporte au moins une architecture électrique (1) selon l'une quelconque des revendications 1 à 11.
